# FASCICULE DE BREVET EUROPEEN

(11) **EP 0 945 943 B1**
(45) Date de publication et mention de la délivrance du brevet: **27.09.2006**
(21) Numéro de dépôt: 98480019.3
(22) Date de dépôt: 24.03.1998
(51) Int. Cl.: H02G 3/04, H02G 3/30

(54) **Corniche cache réseaux**
Blende zur Abdeckung von Stromnetzen
Corniche for hiding Powernetworks

(43) Date de publication de la demande: 29.09.1999
(73) Titulaire: Bauris, Jacques, 20200 Bastia (FR)
(72) Inventeur: Bauris, Jacques, 20200 Bastia (FR)
(74) Mandataire: Hautier, Jean-Louis

(56) Documents cités:
- DE-U- 29 714 648
- US-A- 3 302 350
- US-A- 4 349 220
- US-A- 5 694 726

## Description

La présente invention concerne un dispositif pour permettre aux réseaux de câble défigurant des façades d'être dissimulés à l'intérieur d'un élément à vocation décorative tout en assurant le maintien et l'entretien du réseau avec facilité d'intervention dans le temps.

En effet, il est fréquemment vu que des câbles de type EDF,TELECOM, etc sont fixés à même le mur afin de diminuer le coût et de permettre une intervention rapide en cas de rajout ou d'entretien.

Les documents US-A-5 694 726 et US-A-3 302 350 décrivent un dispositif pour cacher des réseaux câblés passant le long de murs conformément en préambule de la revendication 1.

Cette invention répond de par sa conception à plusieurs critères importants.

Le premier est d'allier une forme en harmonie avec une architecture existante et un volume intérieur suffisamment grand pour permettre le passage des réseaux.

Le second est une mise en place et un réglage simple à l'aide de fixations non corrosives. Un point important de ce mode de fixation est qu'il devient totalement invisible car l'élément vient une fois les fixations positionnées se crocheter dessus les faisant donc disparaître. La patte de fixation comporte un percement oblong.

Le troisième est une rainure en tête de la partie fixe qui permet au capot un point de bridage à n'importe quel endroit, rainure qui se situe sur la longueur de l'élément décoratif.

Le quatrième intérêt de cette invention est lié au fait que les réseaux seront repris en tête de cette fixation par des accessoires déjà existant chez les intervenants suivants et donc que l'élément ne supporterait aucun poids supplémentaire.

Le cinquième critère de cette invention est lié au fait qu'une partie amovible est laissée à l'usage des différents intervenants ce qui procure dans le temps une simplicité d'intervention. Il suffit de débrider le capot en façade pour pouvoir le soulever et avoir plein accès à l'intérieur de l'élément décoratif afin de pouvoir effectuer toutes les opérations nécessaires à son entretien ou extension.

Le sixième point concerne l'évacuation des eaux de pluie qui pourraient pénétrer dans l'élément. A cet effet, un orifice d'évacuation a été positionné en partie basse de cette pièce, l'extrémité étant éloignée de la surface décorative, cela évite toute trace d'écoulement.

L'invention est caractérisée par un dispositif pour cacher des réseaux câblés passant le long de murs présentant les caractéristiques énoncées à la revendication 1.

Selon des modes particuliers de réalisation :
- la forme de l'élément peut changer afin de répondre à d'autres exigences esthétiques ou techniques, ce qui peut entraîner la modification de sa fixation,
- sa fixation peut être effectuée par un simple percement sans utiliser le principe de crochetage,
- son aspect peut être modifié (couleur, matière, ...),
- le collage de l'élément est possible,
- en fonction des réseaux à habiller, le capot peut avoir une forme différente et donc en modifier son mode de maintien et bridage,
- à cet élément de base vient se rajouter toute autre pièce nécessaire à habiller tous les dévoiements possibles qu'entraîneraient les réseaux ou les points d'appuis.

Les dessins annexés illustrent l'invention.

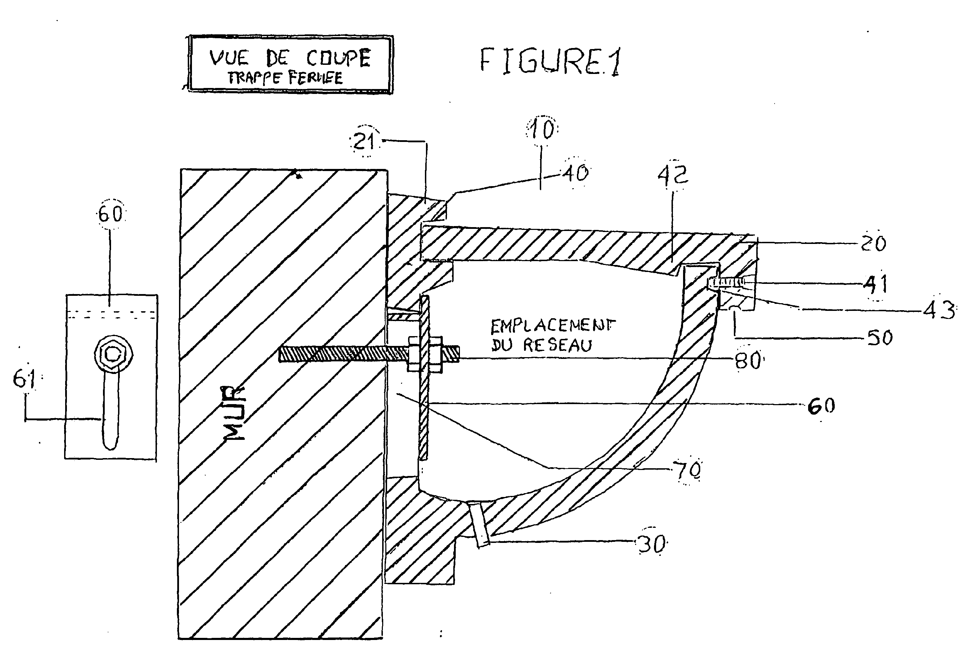

La figure 1 représente l'invention en coupe, élément avec son capot fermé et bridé et sa patte de fixation.

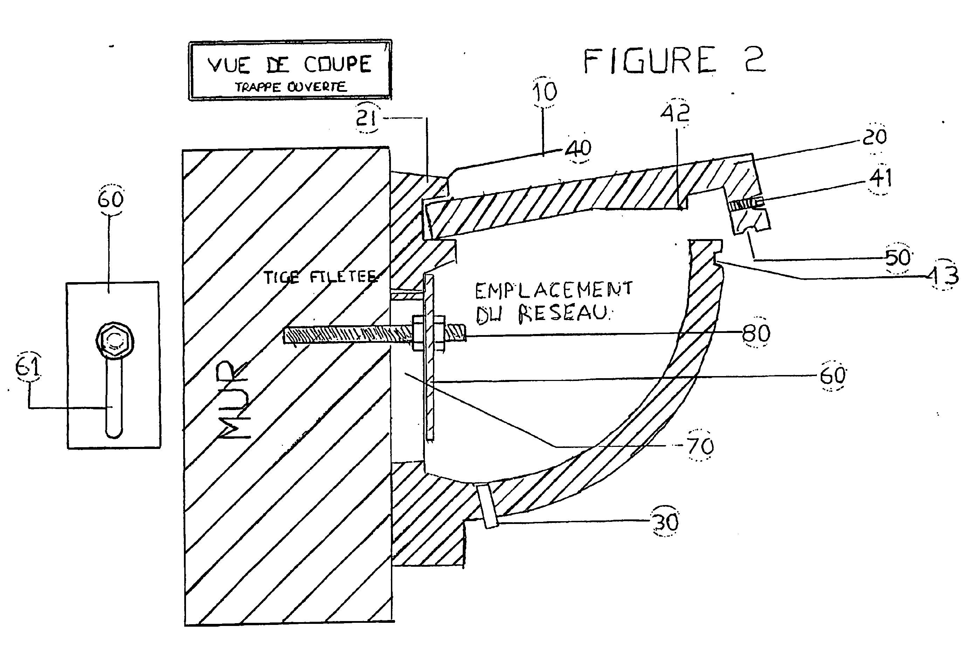

La figure 2 représente en coupe l'élément avec son capot en partie soulevé et sa patte de fixation.

En référence à ces dessins, l'élément 10 contient une partie fixe 21 à crocheter, dans ce but, au moins une réservation 70 y est prévue.

La pièce filetée 80 est fixée dans un mur d'appui ; sur cette pièce, la patte 60 nécessaire au crochetage vient se positionner en profondeur et hauteur grâce aux écrous et aux percements oblongs 61 permettant le réglage altimétrique de la patte.

La pièce fixée 21 en partie haute contient au moins un retour ce qui permet une étanchéité ultérieure ou une épaisseur d'enduit au moins.

Une nervure 40 permet à un capot de venir s'encastrer à l'intérieur et évite tout soulèvement ou entrée d'eau. La partie la plus avancée de l'élément fixé dispose d'au moins une rainure 43 ou nervure sur sa longueur afin de permettre une fixation du capot 20.

Le capot 20 peut contenir au moins une nervure ou rainure pour son maintien. Il est prévu au moins une fixation mécanique 41 qui permet un bridage à volonté, un larmier ou goutte d'eau peut faire partie du capot 50.

En partie basse de l'élément 21 se trouve au moins une évacuation d'eau 30, sa forme et position sont conçues pour qu'aucun écoulement ne suinte le long de l'élément ou façade.

Selon une variante non illustrée, le capot 20 peut, en changeant de forme, se positionner en face avant afin de répondre à une autre dimension par exemple un réseau à habiller plus volumineux.

A titre d'exemple non limitatif, l'élément aura des dimensions de l'ordre de 21 cm de haut sur 21 cm de large sur une longueur de 200 cm.

## Revendications

1. Dispositif pour cacher des réseaux câblés passant le long de murs et permettant un accès simple et rapide du type composé de deux parties, l'une fixe (21), l'autre mobile (20), la partie fixe (21) fait office de support de fixation, la partie mobile (20) fait office de capot, **caractérisé par le fait**
**que** la forme de la partie fixe a la forme d'une corniche de décoration adaptée au style de la construction dont l'intérieur est évidé, l'évidement central de la corniche « cache réseau » autorisant le passage de réseaux câblés, la partie fixe (21) est en deux parties, une partie délimite un volume intérieur suffisamment grand pour permettre le passage des câbles, une partie supérieure verticale est contre le mur pour la fixation, l'autre partie inférieure forme un demi-cercle pour créer ce volume intérieur passant sous les câbles.

2. Dispositif selon la revendication 1 **caractérisé par le fait**
**que** la partie fixe (21), qui a la forme d'une corniche décorative, est équipé dans sa partie basse d'une évacuation d'eau (30), la forme et la position de ladite évacuation (30) étant conçues pour qu'aucun écoulement ne suinte le long de l'élément de la façade ;
et **que** la partie mobile (20), qui fait office de capot, est pourvu d'un larmier ou goutte d'eau.

3. Dispositif, selon la revendication 1, **caractérisé par le fait**
**que** la partie fixe (21) est fixée à la façade ou au mur par un système de crochetage (pièces 80 et 60) qui prend place dans une réservation (70) ; le système de crochetage est constitué d'une tige filetée (80) ancrée au mur ou à la façade, qui passe dans le trou oblong (61) d'une patte (60) ; deux écrous, situés de part et d'autre de cette patte, permettent le réglage en profondeur de l'écart entre la patte et le mur, la forme oblongue du percement de la patte permettant un réglage en hauteur du positionnement de la patte, et
**que** la partie fixe (21) est dotée de réservations (70) grâce auxquelles elle vient ensuite se crocheter sur cette patte (60), la taille des réservations (70), plus large que la patte (60), permet le réglage en largeur du positionnement de la partie fixe (21).

4. Dispositif, selon l'une quelconque des revendications 1 à 3, **caractérisé par le fait**
**que** le bout de la tige filetée (80), apparent dans le creux de la partie fixe, peut servir de point de reprise pour les différentes pièces de fixation des réseaux ; cette tige filetée (80) a trois fonctions, la première, l'ancrage au mur, la seconde, le support de la patte de fixation (60) et la troisième, à son extrémité, un point de reprise des différentes pièces de fixation des intervenants futurs,
**que** la partie la plus avancée de cette partie fixe est dotée d'au moins une rainure (43) pour permettre la fixation mécanique de la partie mobile, et
**qu'**une nervure (40) est présente sur la partie arrière pour permettre au capot de venir s'encastrer.

5. Dispositif, selon la revendication 4, **caractérisé par le fait**
**que** la partie mobile (20), formant le capot, est dotée d'au moins une fixation mécanique constituée par un trou dans le rebord du capot (11) permettant le passage d'un élément fileté qui, une fois le capot fermé, se fichera dans la rainure (43) de la partie fixe.

6. Dispositif, selon la revendication 5, **caractérisé par le fait**
**que** le capot (20) est doté d'une nervure (42) qui, une fois le capot fermé, vient prendre appui sur la partie avant de la partie fixe (21) pour participer à son maintien en place.

## Claims

1. Device for hiding cabled networks along walls to allow easy and fast access, consisting of two parts, one fixed (21) the other movable (20), the fixed part (21) acting as the mounting support, the movable part (20) acting as the cover, **characterised in that**
the fixed part is shaped like a decorative cornice adapted to the style of the building, and forms a central hollow space inside the "network-hiding" cornice which is used to pass through network cables, fixed part (21) is in two parts, one defining a sufficiently large internal volume to allow the installation of cables, a vertical upper part being mounted on the wall, the other lower part forming a half-circle to create this internal space passing under the cables.

2. Device according to claim 1 **characterised in that**
fixed part (21), which is shaped like a decorative cornice, is equipped in its low part with a trickle hole (30), the form and the position of the aforesaid trickle hole (30) being designed so that no liquid runs onto the wall;
and that movable part (20), which is the cover, is equipped with a drip system.

3. Device according to claim 1 **characterised in that**
fixed part (21) is mounted on a frontage or wall by a fastening system (parts 80 and 60) which is positioned in a reservation (70); the fastening system consists of a threaded rod (80) anchored to the wall or frontage, which passes in oblong hole (61) of lug (60); two nuts, located on both sides of this lug, take up any depth difference between the lug and the wall, while the oblong form of the piercing can be used to adjust the height of the lug position, and that
fixed part (21) has reservations (70) thanks to which it can be hooked onto this lug (60), the size of the reservations (70), which are broader than lug (60), can be used for widthwise adjustment of the position of fixed part (21).

4. Device according to any of claims 1 to 3 **characterised in that**
the end of threaded rod (80), which is visible in the hollow of the fixed part, can be used to hold the different mounting parts of the networks; this threaded rod (80) has three functions, the first being to anchor the system to the wall, the second being to support fastening lug (60) and the third, at its end, being to provide a point for attaching the different fastening parts of future users,
the most advanced part of this fixed part has at least one groove (43) to allow mechanical fixing of the moving part, and
there is a rib (40) on the rear part into which the cover part fits.

5. Device according to claim 4 **characterised in that**
movable part (20) forming the cover is equipped with at least a mechanical fixing device consisting of a hole in the edge of cover (11) to allow the passage of a threaded element which, once the cover has been closed, will fit into groove (43) of the fixed part.

6. Device according to claim 5 **characterised in that**
cover (20) is equipped with a rib (42) which, once the cover is closed, comes to bear on the front of fixed part (21) in order to help to hold it in place.

## Patentansprüche

1. Vorrichtung zum Abdecken von an Mauerwerk entlang verlegten Kabelnetzen, bestehend aus zwei Teilen, einem festmontierten (21) und einem beweglichen (20), die aufgrund dieser Konzeption den einfachen und raschen Zugang gestatten, da der festmontierte Teil (21) als Halterung zur Befestigung des die Abdeckung bildenden beweglichen Teils (20) dient, **gekennzeichnet dadurch,**
**dass** der festmontierte Teil die Form einem Gesims besitzt, die innen hohl und dem Konstruktionsstil angepasst ist, dass dieser mittige Hohlraum dem "Stromnetzenabdeckungs"-Gesims die Durchführung von Kabeln erlaubt, dass der festmontierte Teil (21) aus zwei Teilen besteht, einem Teil, der ein zur Durchführung von Kabeln ausreichend großes Volumen besitzt und einem senkrechten, an der Wand befestigten Oberteil, wobei das Unterteil einen Halbkreis bildet, um diesen unter den Kabeln verlaufenden Innenhohlraum zu bilden.

2. Vorrichtung gemäss Anspruch 1, **gekennzeichnet dadurch,**
**dass** der festmontierte Teil (21), der die Form einem Gesims hat, im unteren Bereich eine Wasserableitung (30) besitzt und Form und Lage der genannten Wasserableitung (30) so gestaltet sind, dass kein Wasser an dem Fassadenelement herunterlaufen kann,
und **dass** der als Deckel dienende bewegliche Teil (20) mit einer Abtropfvorrichtung versehen ist.

3. Vorrichtung gemäss Anspruch 1, **gekennzeichnet dadurch,**
**dass** der festmontierte Teil (21) mit einem Hakensystem (Teile 80 und 60) an der Fassade oder der Wand befestigt ist, das in eine Ausnehmung (70) eingreift und das Hakensystem aus einem in der Mauer oder der Fassade verankerten Gewindestift (80) besteht, der in das Langloch (61) einer Lasche (60) eingeführt wird, sowie zwei Muttern auf jeder Seite dieser Lasche, die eine Tiefenverstellung des Abstands zwischen der Lasche und der Mauer ermöglicht, die längliche Form der Bohrung der Lasche dient zur Höhenverstellung der Lasche, und
**dass** der festmontierte Teil (21) mit Ausnehmungen (70) versehen ist, dank derer er an dieser Lasche (60) verhakt werden kann, wobei die Größe dieser Ausnehmungen (70), die breiter sind, als die Lasche (60), eine Verstellung der Lage des festmontierten Teils (21) in seitlicher Richtung zulässt.

4. Vorrichtung gemäss einem der Ansprüche 1 bis 3, **gekennzeichnet dadurch,**
**dass** das Ende der Gewindestange (80), die in den Hohlraum des festmontierten Teils hineinragt, als Anschlusspunkt für die verschiedenen Befestigungselemente der Kabel dienen kann, so dass diese Gewindestange (80) drei Funktionen hat: erstens die Verankerung in der Mauer, zweitens die Befestigung der Lasche (60) und drittens ihr Ende einen Anschlusspunkt für die Befestigungselemente später durchzuführender Arbeiten darstellt,
**dass** der am weitesten hervorstehende Teil mindestens eine Nut (43) zur mechanischen Befestigung des beweglichen Teils
und der hintere Teil eine Nut (40) aufweist, in den der Deckel eingreifen kann.

5. Vorrichtung gemäss Anspruch 4, **gekennzeichnet dadurch,**
**dass** der bewegliche, den Deckel bildende Teil (20) mit mindestens einer mechanischen Befestigung versehen ist, bestehend aus einem Loch im Rand des Deckels (11), durch das ein Gewindeelement gesteckt werden kann, welches, nachdem der Deckel geschlossen wurde, in die Nut (43) des festmontierten Teils eingreift.

6. Vorrichtung gemäss Anspruch 5, **gekennzeichnet dadurch,**
**dass** der Deckel (20) eine Nut (42) besitzt, die, wenn der Deckel geschlossen ist, auf dem vorderen Bereich des festmontierten Teils (21) aufliegt, und so zu seiner Fixierung beiträgt.
